# FASCICULE DE BREVET EUROPEEN

(11) **EP 3 967 263 B1**
(45) Date de publication et mention de la délivrance du brevet: **26.07.2023**
(21) Numéro de dépôt: 21306234.2
(22) Date de dépôt: 09.09.2021
(51) Int. Cl.: A61C 13/00, A61C 5/70, A61C 5/73, A61C 5/77

(54) **BLOC USINABLE PAR CFAO POUR LA FABRICATION D'ÉLÉMENT PROTHÉTIQUE DENTAIRE**
MASCHINELL BEARBEITBARER CFAO-BLOCK FÜR DIE HERSTELLUNG VON ZAHNPROTHETISCHEN ELEMENTEN
UNIT MACHINABLE BY CAD/CAM FOR THE PRODUCTION OF A DENTAL PROSTHETIC ELEMENT

(30) Priorité: 15.09.2020 FR 2009357
(43) Date de publication de la demande: 16.03.2022
(73) Titulaire: Societe de Recherches Techniques Dentaires, 38120 Saint-Egreve (FR)
(72) Inventeur: CHU, Manh-Quynh, 38120 Fontanil Cornillon (FR)
(74) Mandataire: Cabinet Laurent & Charras

(56) Documents cités:
- EP-A1- 2 692 312
- EP-A1- 2 839 807
- WO-A1-2008/083358
- WO-A1-2009/070470
- WO-A1-2017/098096
- DE-A1-102006 051 294
- FR-A1- 3 019 461

## Description

### Domaine technique de l'invention

La présente invention se rapporte à un bloc destiné aux machines d'usinage CFAO ou plus généralement un bloc support usinable par CFAO pour la fabrication d'un élément prothétique dentaire particulier, à savoir un inlay-core (comprenant en combinaison un tenon et un faux moignon) surmonté d'une couronne.

### Arrière-plan technologique

L'usinage d'éléments prothétiques dentaires, spécifiquement des couronnes, des bridges par CFAO (Conception Fabrication Assistée par Ordinateur) à partir de préforme est parfaitement connu. Cette technologie, également désignée CAD/CAM en anglais a par exemple été décrite dans le document EP 0 040 165. La technologie a depuis évolué, tant sur le plan du matériel de CFAO, que sur le plan de la composition des préformes.

Il existe essentiellement 2 types de préformes.

Le premier type de préforme se présente sous la forme de « blocs » de forme générale parallélépipédique. Dans ce cas, les blocs sont fixés au bras articulé exposant la préforme à l'outil d'usinage, par le biais d'un mandrin solidaire du bloc. C'est ce type de préforme qui est concerné par l'invention.

Le document EP 2 692 312 A1 décrit par exemple une préforme destinée à la fabrication de tenons et de couronnes, se présentant essentiellement sous la forme d'une structure fibreuse recouverte sur partie de sa surface d'une couche semi transparente composite, par exemple en polymère. Les fibres se présentent sous la forme de couches planes ou ondulées, ou alors incurvées.Le second type de préforme se présente sous la forme d'un « disque » au sein duquel sont usinés les éléments prothétiques. Dans ce cas, le disque ne présente pas d'agencement spécifique permettant de le fixer sur le bras articulé. Il est simplement positionné dans une empreinte à sa forme que présente le bras articulé.

L'inlay-core est une pièce monobloc constituée d'un tenon surmonté d'un faux moignon. Il est réalisé en métal, plus rarement en céramique. Il est formé d'une seule pièce, raison pour laquelle il est désigné « inlay-core ou post & core ». Il est donc constitué d'un même matériau. L'inlay-core sert de support à une reconstitution de dent dépulpée.

Sur le plan de la fabrication, les inlay-cores métalliques peuvent être obtenus par la technique dite coulée à cire perdue au laboratoire de prothèse ou plus rarement par usinage en CFAO à partir de disque en acier ou en titane.

Il existe également des inlay-cores fibrés, qui peuvent être usinés à partir de disque du type de celui mentionné précédemment et tel que décrit dans le document EP 3386428 A1, dans lequel sont formées des alvéoles. Chaque alvéole est remplie d'un matériau composite dans lequel sont noyées des fibres verticales. La machine CFAO usine directement les inlay core dans le matériau composite.

Dans le cas où l'on souhaite reconstituer une dent complète en matériau composite, il est nécessaire d'utiliser deux blocs CFAO distincts, à savoir un premier bloc CFAO à usiner pour fabriquer l'inlay-core, et un deuxième bloc CFAO à usiner pour fabriquer la couronne. On usine ensuite séparément chacun de ces deux blocs. La fabrication de l'élément prothétique dentaire est donc longue et fastidieuse.

De plus, la fabrication de l'élément prothétique dentaire nécessite deux visites du patient chez le praticien : une première visite pour prendre une première empreinte en vue de la fabrication et de la pose de l'inlay-core, et une deuxième visite pour prendre une seconde empreinte en vue de la fabrication et de la pose de la couronne sur le faux moignon de l'inlay-core, ce qui nécessite du temps pour le patient et pour le praticien, et représente un coût élevé.

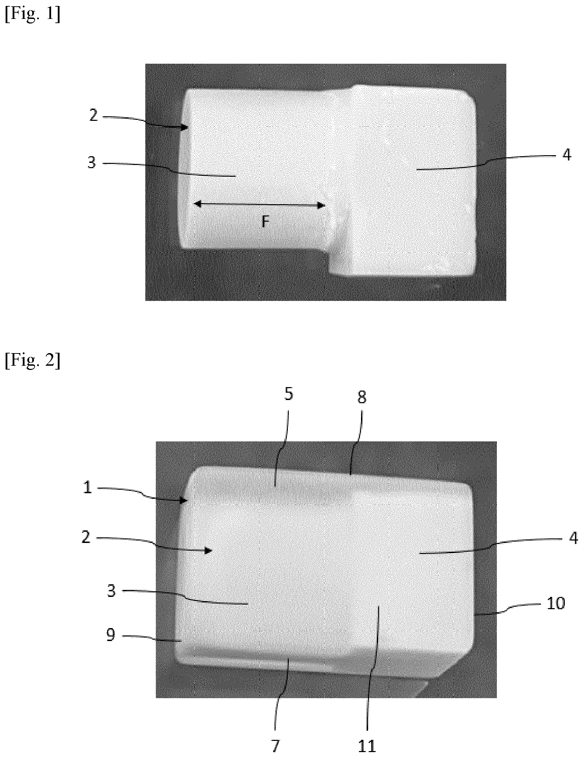

Le document DE 102006051294 A1 décrit un bloc pour CFAO comprenant un insert sur lequel est fixé un mandrin. L'insert permet de fabriquer des inlays, des onlays, des facettes, des couronnes, des couronnes partielles, des bridges ou des parties de bridge (voir [23]). Selon le mode de réalisation décrit [36], l'insert de la figure 1 présente un module élastique proche de celui de l'émail et est le seul à contenir des fibres (voir figure 9). Dans les autres modes de réalisation illustrés, l'insert contient 2 zones distinctes, une dont le module d'élasticité est proche de celui de la dentine et une autre dont le module d'élasticité est proche de celui l'émail.

Le document WO 2009/070470 A1 décrit un bloc pour usinage en CFAO muni d'un mandrin et dans lequel l'insert comprend deux couches de matériau, respectivement un matériau interne similaire à la dentine et un matériau externe similaire à l'émail, l'ensemble étant recouvert par une couche extérieure. Lorsque les matériaux comprennent des fibres, celles-ci sont dans une proportion inférieure à 20% en poids. L'insert est destiné à la fabrication de couronnes, bridges, inlay et onlay.

Le documents FR 3019461 A1 décrit des préformes destinées à la fabrication de couronnes ou de bridges comprenant la superposition de plusieurs tissus à base de fibres, le tissu le plus haut étant recouvert d'une suprastructure dépourvue de fibres. La préforme ne permet pas la fabrication d'un inlay-core surmonté d'une couronne.

Le document EP2839807 A1 décrit une prothèse dentaire pour le remplacement complet de l'arche dentaire. En pratique, les fibres transverses sont noyées dans une résine thermoréticulable. Il ne s'agit pas d'un insert au sens de l'invention associant un inlay-core individualisé surmonté d'une couronne.

### Brève description de l'invention

Un but de l'invention est de proposer un bloc CFAO susceptible d'être fixé à une machine d'usinage CFAO, notamment par l'intermédiaire d'un mandrin solidaire du bloc, qui permette d'usiner à la fois un inlay-core et une couronne, formant ensemble un élément prothétique dentaire, en une seule opération d'usinage.

L'invention vise également à fournir un élément prothétique dentaire comprenant un inlay-core et une couronne, par usinage en CFAO d'un unique bloc CFAO, afin de rendre la fabrication d'un tel élément prothétique dentaire plus simple, plus rapide, et moins coûteuse.

A cette fin, l'invention propose un bloc pour usinage en CFAO d'un élément prothétique dentaire, comme défini dans la revendication 1.

Le bloc est principalement caractérisé en ce que l'insert comprend deux parties liées l'une à l'autre, dont :
- une première partie destinée à être usinée pour former un inlay-core, ladite première partie comprenant un matériau composite comprenant des fibres de renfort unidirectionnelles,
- une deuxième partie destinée à être usinée pour former une couronne, ladite deuxième partie étant dépourvue de fibres de renfort et comprenant un matériau comprenant une ou plusieurs charges minérales.

L'insert du bloc selon l'invention, destiné à être usiné pour fabriquer un élément prothétique dentaire, se présente sous la forme d'une pièce unique, dans laquelle la première et la deuxième partie de l'insert sont liée de manière fixe l'une à l'autre, au moins par une de leur face respective.

Les première et deuxième parties de l'insert peuvent être liées de manière directe, c'est-à-dire qu'elles sont au contact l'une de l'autre, au moins par une de leur face respective. Dans ce cas, et de préférence, la première partie ou la deuxième partie de l'insert comprend un polymère sous forme réticulée, c'est-à-dire qu'il forme un réseau polymérique rigide. Ce polymère réticulé permet de fixer les deux parties de l'insert l'une à l'autre. Plus précisément, les première et deuxième parties de l'insert sont d'abord mises en contact l'une avec l'autre, puis on réticule le ou les polymère(s) de la première partie et/ou de la deuxième partie afin de former une liaison rigide entre les deux parties, au niveau de laquelle le réseau réticulé emprisonne le reste de la première partie et/ou de la deuxième partie de l'insert.

De manière alternative, les première et deuxième parties de l'insert peuvent être liées de manière indirecte, c'est-à-dire qu'elles ne sont pas en contact direct l'une de l'autre mais séparées l'une de l'autre par une couche adhésive intermédiaire. La couche adhésive peut être par exemple une colle, un ciment dentaire, ou un polymère, que l'on positionne entre les première et deuxième parties de l'insert afin de les coller l'une à l'autre.

Comme indiqué précédemment, le bloc de l'invention se présente sous la forme d'une pièce unique comprenant les deux parties de l'insert enrobées dans la couche polymérique. L'usinage du bloc de l'invention permet alors d'usiner à la fois la première partie et la deuxième partie de l'insert pour former l'inlay-core et la couronne, en une seule opération d'usinage, contrairement à l'état de l'art où on usine habituellement deux blocs distincts, dont un permet de réaliser l'inlay-core et l'autre la couronne. Ceci représente un gain de temps et de ressources important, ce qui réduit fortement les coûts de fabrication associés.

De plus, grâce au bloc de l'invention, une seule visite du patient chez le praticien est nécessaire prendre les empreintes en vue de la fabrication et de la pose de l'inlay-core et de la couronne formant l'élément prothétique dentaire, ce qui réduit le temps et les coût associés à la fois pour le patient et pour le praticien.

Selon d'autres aspects, le bloc pour usinage en CFAO selon l'invention présente les différentes caractéristiques suivantes prises seules ou selon leurs combinaisons techniquement possibles :
- la première partie de l'insert est collée à la deuxième partie de l'insert par une couche adhésive agencée entre lesdites première et deuxième parties ;
- le matériau de la première partie et/ou de la deuxième partie de l'insert comprend un polymère réticulé, lesdites première et deuxième parties étant fixées l'une à l'autre par ledit polymère réticulé ;
- les fibres de renfort de la première partie de l'insert sont longitudinales;
- le matériau de la première partie de l'insert est un matériau composite comprenant au moins un polymère, et les fibres de renfort unidirectionnelles sont noyées dans ledit polymère ;
- le ou les polymère(s) du matériau composite de la première partie de l'insert est choisi parmi les polymères suivants : époxy, polyester, vinylester, résine acrylique, résine méthacrylique, et leurs mélanges ;
- les fibres de renfort unidirectionnelles du matériau de la première partie de l'insert sont choisies parmi : fibres de verre, fibres de quartz, fibres de silice, et leurs mélanges ;
- les fibres de renfort unidirectionnelles du matériau de la première partie de l'insert représentent entre 50% et 85% en poids par rapport au poids dudit matériau de la première partie de l'insert ;
- le matériau de la deuxième partie de l'insert est un matériau composite comprenant au moins un polymère et des charges minérales noyées dans ledit polymère ;
- le ou les polymère(s) du matériau composite de la deuxième partie de l'insert est choisi parmi les polymères suivants : résine acrylique, résine méthacrylique, et leurs mélanges ;
- le matériau de la deuxième partie de l'insert est un matériau céramique ;
- les charges minérales du matériau de la deuxième partie de l'insert sont choisies parmi : silice, verre, céramique, particules radio-opaques, et leurs mélanges ;
- les charges du matériau de la deuxième partie de l'insert représentent entre 50% et 85% en poids par rapport au poids dudit matériau de la deuxième partie de l'insert ;
- la couche polymérique est réalisée dans un matériau comprenant :
   *un polymère thermodurcissable choisi dans le groupe comprenant : polyuréthane (PU), résine méthacrylique, résine acrylique et leurs mélanges, ou
   *un polymère thermoplastique choisi dans le groupe comprenant : polycarbonate (PC), polyoxyméthylène ou polyacétal (POM), polyméthylméthacrylate (PMMA), polyuréthane (PU), polyamide (PA), et leurs mélanges.
- le matériau de la couche polymérique comprend des fibres de verre ;
- les fibres de verre du matériau de la couche polymérique représentent de 10% à 50% en poids par rapport au poids dudit matériau de ladite couche polymérique ;
- le mandrin peut être de préférence en métal, en matériau composite, ou dans le même matériau que celui de la couche polymérique.

Un autre objet de l'invention est un élément prothétique dentaire comprenant :
- un inlay-core, comprenant un matériau composite comprenant des fibres de renfort unidirectionnelles,
- une couronne, dépourvue de fibres de renfort, comprenant un matériau composite comprenant une ou plusieurs charges minérales,
l'élément prothétique dentaire étant préfabriqué.

L'élément prothétique dentaire est de préférence obtenu par usinage du bloc CFAO décrit précédemment, en une seule et unique opération d'usinage. L'usinage de la première partie de l'insert permet d'obtenir l'inlay-core, et la deuxième partie de l'insert permet d'obtenir la couronne. Le matériau de l'inlay-core correspond donc au matériau de la première partie de l'insert, et le matériau de la couronne correspond donc au matériau de la deuxième partie de l'insert. Ces matériaux ont déjà été décrits précédemment et ne seront donc pas répétés dans la suite.

L'expression « élément prothétique dentaire préfabriqué » signifie que l'élément prothétique dentaire est fabriqué monobloc en un unique ensemble comprenant l'inlay-core et la couronne, et ce avant d'être positionné dans la bouche du patient. En d'autres termes, à l'issue de l'usinage de l'insert, on obtient un élément prothétique dentaire déjà assemblé, sans qu'il ne soit nécessaire d'assembler ultérieurement l'inlay-core avec la couronne lors de la pose de l'élément prothétique dentaire dans la bouche du patient.

En d'autres termes, l'invention a également pour objet un élément prothétique dentaire monobloc comprenant un inlay-core, comprenant un matériau composite comprenant des fibres de renfort unidirectionnelles, ledit inlay-core étant surmonté d'une couronne, dépourvue de fibres de renfort, et comprenant un matériau comprenant une ou plusieurs charges minérales.

L'invention se rapporte en outre à un procédé de fabrication d'un élément prothétique dentaire, comprenant les étapes suivantes :
- fourniture d'un bloc tel que décrit précédemment,
- usinage en CFAO du bloc pour obtenir l'élément prothétique dentaire.

L'invention concerne également à un élément prothétique dentaire comprenant un inlay-core et une couronne liés l'un à l'autre, ledit élément prothétique dentaire étant obtenu par le procédé de fabrication précédent.

### Description des figures

D'autres avantages et caractéristiques de l'invention apparaîtront à la lecture de la description suivante donnée à titre d'exemple illustratif et non limitatif, en référence aux figures annexées suivantes :
[Fig. 1] La figure 1 est une photographie d'un insert comprenant deux parties liées entre elles, dont une première partie est destinée à former un inlay-core après usinage, et une deuxième partie est destinée à former une couronne après usinage ;
[Fig. 2] La figure 2 est une photographie d'un bloc CFAO, comprenant l'insert de la figure 1 recouvert sur chacune de ses faces d'une couche polymérique ;
[Fig. 3A] La figure 3A est une photographie du bloc de la figure 2, auquel est fixé un mandrin en regard de la première partie de l'insert ;
[Fig. 3B] La figure 3B est une photographie du bloc de la figure 3A selon une vue différente et rapprochée.

### Description détaillée de modes de réalisation de l'invention

L'invention concerne un bloc pour usinage en CFAO d'un élément prothétique dentaire. Un tel bloc est destiné à être usiné pour fabriquer un élément prothétique dentaire comprenant un inlay-core et une couronne.

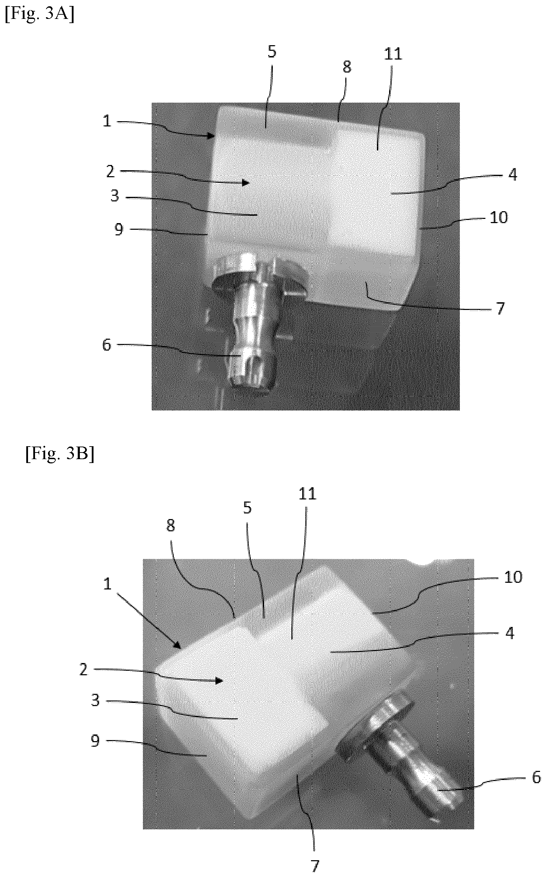

En référence aux figures 1, 2, 3A, et 3B, le bloc **1** comprend un insert **2** comprenant deux parties, dont une première partie **3** et une deuxième partie **4.**

Un mandrin **6** est fixé à une face du bloc **1,** de préférence au regard de la première partie de l'insert **2.** Le mandrin **6** permet de fixer le bloc **1** à une machine d'usinage pour réaliser l'usinage dudit bloc.

L'insert **2** est monobloc, dit aussi d'un seul tenant, en ce que la première et la deuxième partie **3, 4** sont liées rigidement l'une à l'autre, au moins par une de leur face respective, de manière à former un seul ensemble. L'usinage de l'insert en CFAO implique donc d'usiner, en une même opération d'usinage, la première partie et la deuxième partie de l'insert, pour fabriquer l'élément prothétique dentaire. Ceci sera expliqué plus en détail dans la suite du présent texte.

La première partie **3** de l'insert est destinée à former, après usinage, l'inlay-core de l'élément prothétique dentaire. Elle se présente de préférence sous la forme d'un cube, d'un parallélépipède rectangle, d'un cylindre, ou d'un cône par exemple, dont la longueur, c'est-à-dire sa plus grande dimension, est de préférence sensiblement perpendiculaire à la longueur de la deuxième partie **4** de l'insert **2.**

La première partie **3** de l'insert comprend un matériau composite. Ce matériau composite comprend des fibres de renfort unidirectionnelles.

Les polymères constitutifs du matériau composites sont de préférence choisis parmi les polymères suivants : époxy, polyester, vinylester, résine acrylique, résine méthacrylique, et leurs mélanges.

Les fibres de renfort du matériau composite de la première partie 3 de l'insert sont des fibres longues et unidirectionnelles. Par « longues », on entend que les fibres présentent une longueur correspondante à celle de l'inlay-core, en général de 5 à 20mm. Ces fibres sont dites « unidirectionnelles » en ce qu'elles s'étendent dans une seule direction, celle de leur longueur, en négligeant leur épaisseur.

Les fibres de renfort sont noyées dans le matériau composite.

Au sein du bloc **1,** les fibres de renfort s'étendent de manière sensiblement perpendiculaire à la deuxième partie **4** de l'insert **2,** comme illustré par la double flèche **F** sur la figure 1.

Les fibres de renfort sont de préférence choisies parmi les fibres de verre, les fibres de quartz, les fibres de silice, et leurs mélanges.

Les fibres de renfort représentent de préférence jusqu'à 85% en poids par rapport au poids du matériau composite de la première partie **3** de l'insert **2.**

La deuxième partie **4** de l'insert est destinée à former, après usinage, la couronne de l'élément prothétique dentaire. Elle se présente de préférence sous la forme d'un cube, d'un parallélépipède rectangle, ou d'un cylindre par exemple, dont la longueur, c'est-à-dire sa plus grande dimension, est de préférence sensiblement perpendiculaire à la longueur de la première partie **3** de l'insert **2.**

Selon un mode de réalisation préféré, les fibres de renfort s'étendent selon la longueur de la première partie **3** de l'insert. Les fibres de renfort sont avantageusement perpendiculaires à la longueur de la deuxième partie **4** de l'insert. Les première et deuxième parties **3, 4** de l'insert forment ainsi un « T ».

Sur les figures 1, 2, et 3, la première partie **3** de l'insert a une forme cylindrique, et la deuxième partie **4** de l'insert a une forme a une forme parallélépipédique rectangle. La première partie **3** et la deuxième partie **4** de l'insert sont perpendiculaires l'une à l'autre, formant ainsi un « T ».

La deuxième partie **4** de l'insert comprend un matériau non fibreux, c'est-à-dire dépourvu de fibres. Ce matériau comprend une matrice et des charges minérales.

Selon un mode de réalisation, la matrice de la deuxième partie **4** de l'insert est une matrice polymérique comprenant un ou plusieurs polymères. Ces polymères sont de préférence choisis parmi les polymères suivants : résine acrylique, résine méthacrylique, et leurs mélanges.

Les charges permettent de fournir à la couronne obtenue après usinage des propriétés spécifiques, telles que l'ajustement de la teinte, l'ajustement de la brillance, la solidité, ou encore la tenue mécanique.

Les charges sont de préférence choisies parmi : silice, verre, céramique, particules radio-opaques, et leurs mélanges.

Les charges représentent de préférence jusqu'à 85% en poids par rapport au poids du matériau composite de la deuxième partie **4** de l'insert **2.**

L'insert comprend en outre une couche polymérique **5** qui recouvre la totalité de l'insert.

Lorsque le mandrin 6 est monté sur le bloc 1, ledit mandrin est fixé sur l'une des faces du bloc, au contact de la couche polymérique **5.**

Plus précisément, la couche polymérique **5** recouvre à la fois la première partie **3** et la deuxième partie **4** de l'insert **2.** Elle recouvre toutes les faces de l'insert. Une face de l'insert **2** comprend une face de la première partie **3** et une face de la deuxième partie **4** adjacente à ladite face de la première partie **3.**

La couche polymérique **5** recouvre au la face **7** du bloc **1** sur laquelle doit être fixé le mandrin **6,** et permet de faire écran entre le mandrin et la première partie **3** de l'insert ce qui évite de dégrader la structure de ladite première partie **3** de l'insert.

La couche polymérique **5** recouvre la totalité de l'insert **2,** c'est-à-dire la totalité des faces libres de l'insert **2,** de sorte que l'insert est noyé dans la couche polymérique.

La couche polymérique **5** recouvre l'insert **2** de sorte que le bloc **1** (hors mandrin) présente une forme cubique ou parallélépipédique. Le mandrin **6** fait saillie d'une face du cube ou du parallélépipède. Une telle forme cubique ou parallélépipédique est une forme simple aux surfaces bien définies et régulières, ce qui facilite l'usinage du bloc par CFAO par la machine d'usinage.

En pratique, hors mandrin, la couche polymérique **5** représente entre 10% et 50% en poids du poids total du bloc.

De préférence, la couche polymérique **5** est réalisée dans un matériau comprenant un polymère thermodurcissable. Le polymère thermodurcissable est préférentiellement choisi parmi le polyuréthane (PU), une résine méthacrylique, une résine acrylique, et leurs mélanges.

Alternativement, la couche polymérique **5** peut être réalisée dans un matériau comprenant un polymère thermoplastique. Le polymère thermoplastique est préférentiellement choisi parmi le polycarbonate (PC), le polyoxyméthylène ou polyacétal (POM), le polyméthylméthacrylate (PMMA), le polyuréthane (PU), le polyamide (PA), et leurs mélanges.

Le matériau de la couche polymérique **5** comprend de préférence des fibres de renfort, notamment des fibres de verre. Lorsqu'elles sont présentes, les fibres de verre représentent avantageusement de 10% à 50% en poids du poids du matériau de la couche polymérique.

L'invention concerne également l'utilisation du bloc **1** précédemment décrit pour l'usinage d'un élément prothétique dentaire comprenant un inlay-core et une couronne.

Plus précisément, la première partie **3** de l'insert du bloc **1** est usinée par CFAO pour former l'inlay-core, et la deuxième partie **4** de l'insert du bloc **1** est usinée par CFAO pour former la couronne. La couronne est fixée sur le faux moignon de l'inlay-core.

A l'issue de l'usinage des deux parties **3, 4** de l'insert, l'inlay-core et la couronne obtenus sont d'un seul tenant, c'est-à-dire qu'il forment une pièce unique adaptée pour être positionnée et fixée dans une cavité de la dentition du patient.

De préférence, quel que soit le type d'insert, ce dernier subit, avant d'être usiné, un traitement mécanique du type sablage, afin d'obtenir une surface rugueuse favorisant l'adhésion avec la couche polymérique. Si nécessaire, un traitement physico-chimique du type plasma-silanisation peut être appliqué sur l'insert.

Un autre objet de l'invention est un procédé de fabrication d'un bloc tel que décrit précédemment.

Le procédé de fabrication comprend les étapes suivantes :
- mise en place d'un moule comprenant au moins une partie creuse,
- positionnement de l'insert **2** préalablement fabriqué dans le moule,
- injection d'un matériau polymérique dans le moule afin de recouvrir toute la surface de la première partie **3** de l'insert et toute la surface adjacente de la deuxième partie **4** de l'insert, pour former le bloc **1,**
- démoulage du bloc **1.**

Le procédé est de préférence réalisé selon les deux modes de réalisation suivants.

Selon un premier mode de réalisation, l'insert fourni se présente en deux parties distinctes : la première partie **3** et la deuxième partie **4** sont séparées l'une de l'autre.

Les première et deuxième parties **3, 4** de l'insert 2 sont positionnées dans le moule, de préférence dans deux parties creuses distinctes en liaison fluidique l'une avec l'autre ou dans une seule partie creuse du moule.

Le matériau polymérique est injecté dans le moule afin de recouvrir toute la surface de la première partie **3** de l'insert et toute la surface adjacente de la deuxième partie **4** de l'insert.

Lors de la coulée, le matériau polymérique vient également s'insérer entre les première et deuxième parties **3, 4** de l'insert **2,** formant ainsi une couche intermédiaire permettant de coller lesdites première et deuxième parties **3, 4** de l'insert l'une à l'autre.

Ainsi, selon ce premier mode de réalisation, le polymère injecté permet à la fois de former une couche polymérique **5** qui enrobe l'insert, et de former une couche adhésive qui colle les première et deuxième parties **3, 4** de l'insert l'une à l'autre.

Selon un deuxième mode de réalisation, l'insert fourni se présente en une seule pièce. Les première et deuxième parties **3, 4** de l'insert sont liées l'une à l'autre avant l'opération de moulage.

Selon ce mode de réalisation, les première et deuxième parties peuvent être fabriquées séparément l'une de l'autre, puis collées au moyen d'un adhésif, tel qu'une colle, un ciment dentaire, ou tout autre moyen de collage adapté à cet effet.

Alternativement, les première et deuxième parties **3, 4** de l'insert **2** peuvent être assemblées pendant leur fabrication. Dans ce cas, et de préférence, la première partie ou la deuxième partie de l'insert comprend un polymère apte à réticuler, notamment sous l'effet de la lumière, de rayons UV, ou de la température, de manière à former un réseau polymérique rigide. Ce polymère réticulé permet de fixer les deux parties de l'insert l'une à l'autre. Plus précisément, les première et deuxième parties **3, 4** de l'insert **2** sont d'abord mises en contact l'une avec l'autre, de préférence en appliquant un effort mécanique élevé, puis on réticule le ou les polymère(s) afin de former une liaison rigide entre les deux parties de l'insert. Les extrémités des première et deuxième parties de l'insert sont alors imbriquées dans le réseau polymérique réticulé.

L'insert monobloc est ensuite placé dans le moule, et on réalise l'opération de moulage.

Selon le mode de réalisation, on positionne l'insert **2** au centre d'une partie creuse du moule, et on injecte le matériau polymérique dans la totalité du volume restant. Dans ces conditions, toute la surface de l'insert **2** est recouverte de matériau polymérique formant la couche polymérique **5.** L'insert est avantageusement de forme cubique, parallélépipédique rectangle, ou cylindrique.

Selon un mode de réalisation préféré de l'invention, le mandrin 6 est avantageusement fabriqué dans la même opération de moulage que le bloc 1, conformément à ce qui a été décrit précédemment.

Pour ce faire, on fournit un moule comprenant, outre la partie creuse précédente, une deuxième partie creuse présentant l'empreinte du mandrin à fabriquer. La deuxième partie creuse du moule communique avec la première partie creuse.

On réalise ensuite les étapes suivantes :
- positionnement de l'insert **2** préalablement fabriqué dans la première partie creuse du moule,
- injection d'un matériau polymérique dans le moule pour recouvrir la totalité de la surface de l'insert **2,** et pour remplir l'empreinte de la deuxième partie creuse du moule, afin de former le bloc **1,**
- démoulage du bloc **1.**

Ainsi, selon ce mode de réalisation, le mandrin est réalisé dans le même matériau que la couche polymérique. Cela signifie que le matériau du mandrin présente la même composition que le matériau de la couche polymérique.

On usine en CFAO le bloc obtenu pour fabriquer l'élément prothétique dentaire comprenant l'inlay-core et la couronne.

Contrairement aux éléments prothétiques dentaires de l'état de l'art dans lesquels on colle l'inlay-core avec la couronne après avoir usiné séparément l'inlay-core et la couronne, notamment avec un ciment de collage, le bloc CFAO de l'invention est d'un seul tenant, et par conséquent, l'usinage de l'inlay-core et de la couronne est effectué sur une pièce unique, en une seule et unique opération d'usinage.

De plus, l'élément prothétique dentaire obtenu après usinage est lui-aussi d'un seul tenant. On s'affranchit donc de l'étape de collage de l'inlay-core et de la couronne.

Ces avantages permettent d'augmenter la rapidité du procédé et de diminuer les coûts de production.

## Revendications

1. Bloc (1) pour usinage en CFAO d'un élément prothétique dentaire comprenant:
- un insert (2) dans lequel l'élément prothétique dentaire est destiné à être usiné,
- une couche polymérique (5) recouvrant la totalité de l'insert (2) de sorte que le bloc (1) présente une forme cubique ou parallélépipédique,
- un mandrin (6) fixé sur l'une des faces du bloc, au contact de la couche polymérique (5),
l'insert (2) comprenant deux parties (3, 4) liées l'une à l'autre, dont :
- une première partie (3) destinée à être usinée pour former un inlay-core, ladite première partie comprenant un matériau composite comprenant des fibres de renfort unidirectionnelles,
- une deuxième partie (4) destinée à être usinée pour former une couronne, ladite deuxième partie étant dépourvue de fibres de renfort et comprenant un matériau comprenant une ou plusieurs charges minérales.

2. Bloc (1) selon la revendication 1, **caractérisé en ce que** la première partie (3) de l'insert (2) est collée à la deuxième partie (4) de l'insert par une couche adhésive agencée entre lesdites première et deuxième parties (3, 4).

3. Bloc (1) selon la revendication 1, **caractérisé en ce que** le matériau composite de la première partie (3) et/ou de la deuxième partie (4) de l'insert (2) comprend un polymère réticulé, lesdites première et deuxième parties (3, 4) étant fixées l'une à l'autre par ledit polymère réticulé.

4. Bloc (1) selon l'une quelconque des revendications précédentes, **caractérisé en ce que** les fibres de renfort de la première partie (3) de l'insert (2) sont longitudinales.

5. Bloc (1) selon l'une quelconque des revendications précédentes, **caractérisé en ce que** le matériau composite de la première partie (3) de l'insert (2) comprend au moins un polymère, et les fibres de renfort unidirectionnelles sont noyées dans ledit polymère.

6. Bloc (1) selon l'une quelconque des revendications précédentes, **caractérisé en ce que** les fibres de renfort unidirectionnelles du matériau composite de la première partie (3) de l'insert (2) sont choisies parmi : fibres de verre, fibres de quartz, fibres de silice, et leurs mélanges.

7. Bloc (1) selon l'une quelconque des revendications précédentes, **caractérisé en ce que** les fibres de renfort unidirectionnelles du matériau composite de la première partie (3) de l'insert (2) représentent entre 50% et 85% en poids par rapport au poids dudit matériau composite de la première partie (3) de l'insert.

8. Bloc (1) selon l'une quelconque des revendications précédentes, **caractérisé en ce que** le matériau de la deuxième partie (4) de l'insert est un matériau composite comprenant au moins un polymère et des charges minérales noyées dans ledit polymère.

9. Bloc (1) selon l'une quelconque des revendications précédentes, **caractérisé en ce que** les charges minérales du matériau de la deuxième partie (4) de l'insert sont choisies parmi : silice, verre, céramique, particules radio-opaques, et leurs mélanges.

10. Bloc (1) selon l'une quelconque des revendications précédentes, dans lequel les charges du matériau de la deuxième partie (4) de l'insert représentent entre 50% et 85% en poids par rapport au poids dudit matériau composite de la deuxième partie (4) de l'insert.

11. Elément prothétique dentaire monobloc comprenant un inlay-core, comprenant un matériau composite comprenant des fibres de renfort unidirectionnelles, ledit inlay-core étant surmonté d'une couronne, dépourvue de fibres de renfort, et comprenant un matériau comprenant une ou plusieurs charges minérales.

12. Procédé de fabrication d'un élément prothétique dentaire, comprenant les étapes suivantes :
- mise en place d'un bloc (1) selon l'une quelconque des revendications 1 à 10,
- usinage en CFAO du bloc (1) pour obtenir l'élément prothétique dentaire.

## Patentansprüche

1. Maschinell bearbeitbarer CFAO - Block (1) für die Herstellung von zahnprothetischen Elementen, der umfasst:
- einen Einsatz (2), in dem das zahnprothetische Element bearbeitet werden soll,
- eine Polymerschicht (5), die den Einsatz (2) vollständig bedeckt, so dass der Block (1) eine würfelförmige oder quaderförmige Form hat,
- ein Futter (6), befestigt auf einer der Seiten des Blocks, in Kontakt mit der Polymerschicht (5),
der Einsatz (2) umfasst zwei Teile (3, 4) die miteinander verbunden sind, davon
- ein erster Teil (3), bestimmt zur Bearbeitung, um einen Inlay-core zu bilden, dieser erste Teil enthält dabei ein Verbundmaterial, das unidirektioale Verstärkungsfasern enthält,
- ein zweiter Teil (4), dazu bestimmt so bearbeitet zu werden, dass er eine Krone bildet, diese zweite Schicht enthält keine Verstärkungsfasern und enthält ein Material mit einem oder mehreren Mineralzuschlägen.

2. Block (1) nach Anspruch 1, **dadurch gekennzeichnet, dass** der erste Teil (3) des Einsatzes (2) mittels einer Haftschicht an den zweiten Teil (4) des Einsatzes geklebt ist, die zwischen diesem ersten und zweiten Teil (3, 4) vorgesehen ist.

3. Block (1) nach Anspruch 1, **dadurch gekennzeichnet, dass** das Verbundmaterial des ersten Teils (3) und/ oder des zweiten Teils (4) des Einsatzes (2) ein vernetztes Polymer enthält, dieser erste und zweite Teil (3, 4) sind miteinander über dieses vernetzte Polymer verbunden.

4. Block (1) nach irgendeinem der vorstehenden Ansprüche, **dadurch gekennzeichnet, dass** die Verstärkungsfasern des ersten Teils (3) des Einsatzes (2) in Längsrichtung verlaufen.

5. Block (1) nach irgendeinem der vorstehenden Ansprüche, **dadurch gekennzeichnet, dass** das Verbundmaterial des ersten Teils (3) des Einsatzes (2) mindestens ein Polymer enthält und die unidirektionalen Verstärkungsfasern in dieses Polymer eingebettet sind.

6. Block (1) nach irgendeinem der vorstehenden Ansprüche, **dadurch gekennzeichnet, dass** die unidirektionalen Verstärkungsfasern des Verbundmaterials des ersten Teils (3) des Einsatzes (2) ausgewählt werden aus: Glasfasern, Quarzfasern, Siliziumfasern und ihren Mischungen.

7. Block (1) nach irgendeinem der vorstehenden Ansprüche, **dadurch gekennzeichnet, dass** die unidirektionalen Verstärkungsfasern des Verbundmaterials des ersten Teils (3) des Einsatzes (2) zwischen 50 und 85 Gewichts-% bezogen auf das Gewicht dieses Verbundmaterials des ersten Teils (3) des Einsatzes bilden.

8. Block (1) nach irgendeinem der vorstehenden Ansprüche, **dadurch gekennzeichnet, dass** das Material des zweiten Teils (4) des Einsatzes ein Verbundmaterial ist, das mindestens ein Polymer und in dieses Polymer eingebettete Mineralzuschläge enthält.

9. Block (1) nach irgendeinem der vorstehenden Ansprüche, **dadurch gekennzeichnet, dass** die Mineralzuschläge des zweiten Teils (4) des Einsatzes ausgewählt werden aus: Silizium, Glas, Keramik, strahlenundurchlässige Teilchen und ihren Mischungen.

10. Block (1) nach irgendeinem der vorstehenden Ansprüche, in dem die Materialzuschläge des zweiten Teils (4) des Einsatzes zwischen 50 und 85 Gewichts-% bezogen auf das Gewicht dieses Verbundmaterials des zweiten Teils (4) des Einsatzes darstellt.

11. Zahnprothetische Monoblock - Element mit einem Inlay-core, das ein Verbundmaterial enthält, das unidirektionale Verstärkungsfasern enthält, auf diesem Inlay-core befindet sich eine Krone ohne Verstärkungsfasern, und er enthält ein Material mit einem oder mehreren Mineralzuschlägen.

12. Verfahren zur Herstellung eines zahnprothetischen Elementes, das die folgenden Schritte umfasst:
- Einlegen eines Blocks (1) nach irgendeinem der vorstehenden Ansprüche 1 bis 10,
- CAD/CAM- Bearbeitung des Blocks (1) um das zahnprothetische Element zu erhalten.

## Claims

1. Block (1) for the CAD/CAM machining of a dental prosthetic element comprising:
- an insert (2) wherein the dental prosthetic element is intended to be machined,
- a polymeric layer (5) covering the totality of the insert so that the block has a cubic or a parallelepiped shape,
- a mandrel (6) fixed to the insert (2) in contact with the polymeric layer (5), the insert (2) comprising two parts (3, 4) connected to one another, of which:
- a first part (3) intended to be machined to form an inlay-core, said first part comprising a composite material comprising one-directional reinforcing fibres,
- a second part (4) intended to be machined to form a crown, said second part having no reinforcing fibres and comprising a material comprising one or more mineral fillers.

2. Block (1) according to claim 1, **characterised in that** the first part (3) of the insert (2) is glued to the second part (4) of the insert by an adhesive layer arranged between said first and second parts (3, 4).

3. Block (1) according to claim 1, **characterised in that** the composite material of the first part (3) and/or of the second part (4) of the insert (2) comprises a crosslinked polymer, said first and second parts (3, 4) being fixed to one another by said crosslinked polymer.

4. Block (1) according to any one of the preceding claims, **characterised in that** the reinforcing fibres of the first part (3) of the insert (2) are longitudinal.

5. Block (1) according to any one of the preceding claims, **characterised in that** the composite material of the first part (3) of the insert (2) comprises at least one polymer, and the one-directional reinforcing fibres are buried in said polymer.

6. Block (1) according to any one of the preceding claims, **characterised in that** the one-directional reinforcing fibres of the composite material of the first part (3) of the insert (2) are chosen from among: glass fibres, quartz fibres, silica fibres, and their mixtures.

7. Block (1) according to any one of the preceding claims, **characterised in that** the one-directional reinforcing fibres of the composite material of the first part (3) of the insert (2) represent between 50% and 85% by weight with respect to the weight of said composite material of the first part (3) of the insert.

8. Block (1) according to any one of the preceding claims, **characterised in that** the material of the second part (4) of the insert is a composite material comprising at least one polymer and mineral fillers buried in said polymer.

9. Block (1) according to any one of the preceding claims, **characterised in that** the mineral fillers of the material of the second part (4) of the insert are chosen from among: silica, glass, ceramic, radio-opaque particles, and their mixtures.

10. Block (1) according to any one of the preceding claims, wherein the fillers of the material of the second part (4) of the insert represent between 50% and 85% by weight with respect to the weight of said composite material of the second part (4) of the insert.

11. One-piece dental prosthetic element comprising an inlay-core, comprising a composite material comprising one-directional reinforcing fibres, said inlay-core being surmounted by a crown, with no reinforcing fibres, and comprising a material comprising one or more mineral fillers.

12. Method for manufacturing a dental prosthetic element, comprising the following steps:
- implementation of a block (1) according to any one of claims 1 to 10,
- CAD/CAM machining of the block (1) to obtain the dental prosthetic element.
